# EUROPÄISCHE PATENTSCHRIFT

(11) **EP 2 420 717 B1**
(45) Veröffentlichungstag und Bekanntmachung des Hinweises auf die Patenterteilung: **09.04.2014**
(21) Anmeldenummer: 11006652.9
(22) Anmeldetag: 12.08.2011
(51) Int. Cl.: F16P 1/00, F16P 3/02

(54) **Längenvariable Schutzabdeckung und Federstahllamelle dafür**
Protective cover with variable length and steel plate therefor
Revêtement de protection variable en longueur et lamelle en acier pour celui-ci

(30) Priorität: 21.08.2010 DE 202010011667 U
(43) Veröffentlichungstag der Anmeldung: 22.02.2012
(73) Patentinhaber: HEMA Maschinen- und Apparateschutz GmbH, 63500 Seligenstadt (DE)
(72) Erfinder: Willand, Thorsten, 64832 Babenhausen (DE)
(74) Vertreter: Erb, Henning

(56) Entgegenhaltungen:
- DE-A1- 3 635 874
- DE-U1-202005 005 479
- DE-U1-202005 014 596

## Beschreibung

Die vorliegende Erfindung betrifft eine länqenvariable Schutzabdeckung für Werkzeugmaschinen nach dem Oberbegriff des Anspruches 1 und eine Federstahllamelle nach dem Oberbegriff des Anspruchs 7.

Derartige Schutzabdeckungen und Federstahllamellen sind aus der DE 20 2005 005 479 U1 und der DE 20 2005 014 596 U1 bekannt.

Schutzabdeckungen werden seit langer Zeit dazu verwendet, beispielsweise Arbeitsräume von Werkzeugmaschinen abzuschirmen, um die Umgebung bei der zerspanenden Bearbeitung von Werkstücken vor umherfliegenden Spänen zu schützen. Durch die geforderten immer höheren Geschwindigkeiten und verkleinerten Rüstzeiten erhöht sich auch die Dynamik der Maschinenbewegungen beträchtlich, so dass die Schutzabdeckungen beträchtlichen dynamischen Kräften ausgesetzt sind. Die eingangs genannte Lösung stellt dabei den üblichen Standard dar und genügte bislang auch den Anforderungen. Die Klammer besteht in der Regel aus einem gefalteten Stück Federblech, des mit seiner Knickstelle auf dem Steg der Federstahllamelle aufliegt und dabei durch den oberen Schlitz geführt ist. Die betreffende, der Federstahllamella zugeordnete Falte des Faltenbalges liegt dabei parallel zu dem Bereich der Federatahllamelle, in welchen der Steg angeordnet ist. Entsprechend können die Widerhaken eines Schenkels der Klammer direkt ein das Faltenbalgmaterial greifen, während die Widerhaken des andern Schenkels den unterhalb des Steges gelegenen Schlitz durchdringen und ebenfalls in das Faltenbalgmaterial eingreifen. Da man bestrebt ist, die Länge der Schutzabdeckung auch im komprimierten Zustand gering zu halten, hat es sich als erforderlich erwiesen, die Klammern benachbarter Federstahllamellen bzw. Falten des Faltenbalges versetzt zueinander anzuordnen, da im Bereich der Klammern naturgemäß die größte Dicke der Befestigungsstelle zwischen Klammern, Federstahllamelle und Faltenbalg vorliegt. Durch den Versatz liegen die Schenkel der Klammern dann im komprimierten Zustand der Schutzabdeckung nicht hinter- sondern nebeneinander mit entsprechend reduziertem Bauraum der komprimierten Schutzabdeckung.

Andererseits bedingt die Anordnung der Klammern mit wechselseitigem Versatz entweder eine unterschiedliche Ausbildung der aufeinanderfolgenden Federstahllamellen, wodurch sich die Herstellung und Logistik beim Zusammenbau erheblich verkomplizieren, oder die Ausbildung eines längeren Steges, der durch entsprechend längere Schlitze begrenzt wird. Je höher aber nun die dynamischen Kräfte im Zuge der Beschleunigung der Arbeitsabläufe der Werkzeugmaschinen vergrößert worden sind, umso mehr hat sich die Befestigung der Klammer an der Lamelle als Schwachpunkt herausgestellt. Der senkrecht, parallel zur Falte stehende Bereich der Federlamelle erhält nämlich durch die Beschleunigung einen Kraftimpuls, der ein beträchtliches Drehmoment bewirkt, wodurch die Lamellen in abgewinkelten, parallel zur Bewegungsrichtung liegenden Bereichen aufeinander gedrückt werden. Die dabei erreichte hohe Vorspannung ist durchaus erwünscht, um eine besonders gute Abdichtung zu erreichen, bedingt aber auch gleichzeitig sehr hohe Reaktionskräfte im Bereich der Anlagestellen der Klammern an dem Steg. Diese Kräfte führen frühzeitig zu Verformungen der Befestigungsstelle mit nachteiligen Eigenschaften für die Schutzabdeckung oder sogar zu einem Ausreißen der Stege, so dass die Lamelle der betreffenden Befestigungsstelle sich sogar vollständig lösen kann. Die notwendigen Wartungsarbeiten bedeuten Stillstand der Werkzeugmaschine mit teuren Ausfallzeiten.

Die Aufgabe der vorliegenden Erfindung besteht darin, eine längenvariable Schutzabdeckung der eingangs genannten Art dahingehend zu verbessern, dass sie auch höheren dynamischen Betriebsbedingungen ohne einen Ausfall der Befestigungsstellen zwischen den Federstahllamellen und dem Faltenbalg übersteht.

Erfindungsgemäß wird die Aufgabe dadurch gelöst, dass bei einer Schutzabdeckung der eingangs genannten Art wenigstens ein Schlitz durch einen Quersteg in Schlitzkammern unterteilt ist, die für die Aufnahme einer Klammer geeignet sind.

Die erfindungsgemäße Lösung hat in Dauertests trotz verdoppelter Testdauer ihre Dauerfestigkeit unter Beweis gestellt. Trotz hoher dynamischer Beanspruchung und einer hohen Zahl von Testzyklen blieb die Stabilität der Stege über die Testdauer erhalten, Beschädigungen konnten nicht mehr festgestellt werden.

Bedingt durch den Quersteg erlangt der eigentliche Steg zum Abstützen der Klammern eine erhöhte Stabilität und ist besser in der Lage, die durch die dynamischen Bewegungen entstehenden Kräfte an den Körper der Federstahllamelle abzuleiten. Weiter verbessert werden kann die Stabilität dadurch, dass beide Schlitze beidseitig des Steges durch Querstege unterteilt sind, da sich hierdurch die Festigkeit des Steges weiter verbessern lässt.

Unabhängig von der Ausbildung der Stege, Querstege und Schlitze können die bislang üblichen Herstellungsverfahren der Federstahllamellen beibehalten werden, wobei die Schlitze in der Regel durch Stanzen oder Lasern hergestellt werden.

Eine weitere Verbesserung der Festigkeit kann beispielsweise dadurch erreicht werden, dass der Schlitz im Bereich der Widerhaken, in der Regel der untere Schlitz unterhalb des Steges, durch einen Quersteg in zwei Kammern unterteilt ist und die Kammern ihrerseits wieder durch wenigstens jeweils einen weiteren Quersteg zwischen den Widerhaken unterteilt sind. Da im Bereich der Widerhaken nur punktuelle Durchbrüche erforderlich sind, kann die Größe der verbleibenden Kammern stark reduziert werden, so dass die Festigkeit der Lamelle in diesem Bereich des Steges trotz der ausgesparten Kammern nahezu unvermindert aufrechterhalten werden kann.

In der Regel besitzt jede Federstahllamelle über die Länge verteilt wenigstens zwei Stege , die jeweils mit einer Klammer an einer Falte des ziehharmonikaartig ausgebildeten Faltenbalges angebracht sind. Bei längeren Lamellen sind auch drei oder mehr Klammern mit zugehörigen Schlitzen und Stegen in der Lamelle möglich, um einen gleichmäßigen Halt der Federstahllamelle mit ihrem im Vergleich zum Faltenbalg relativ hohen Gewicht zu ermöglichen.

Die Federstahllamellen selbst sind vorzugsweise L-förmig mit einem parallel zu den Falten liegenden Bereich und einem abgewinkelten Bereich ausgebildet, wobei sich die abgewinkelten Bereiche benachbarter Lamellen schuppenartig überlappen. Da sich die Falte des Faltenbalges bis an oder bis in die Nähe des abgewinkelten Bereich erstreckt, liegt vorzugsweise der obere Schlitz praktisch vollständig im abgewinkelten Bereich, während der Steg und der untere Schlitz für die Widerhaken in dem sich parallel zu der Falte des Faltenbalges liegenden Bereich der Federstahllamelle befindet.

Gegenstand der vorliegenden Erfindung sind auch Federstahllamellen, die vom Aufbau der zuvor erörterten längenvariablen Schutzabdeckung benötigt werden. Der Einsatz einzelner solcher erfindungsgemäßer Federstahllamellen ist auch bei bekannten längenvariablen Schutzabdeckungen sinnvoll, wobei beispielsweise beschädigte Federstahllamellen gemäß dem Stand der Technik gegen erfindungsgemäße Federstahllamellen ausgetauscht werden können, da die Kompatibilität selbst beim unveränderten Einsatz der bisher verwendeten Klammern gegeben ist, wenn die entsprechenden Konstruktionsmaße beibehalten werden.

Nachfolgend wird anhand der beiliegenden Zeichnungen näher auf ein Ausführungsbeispiel der Erfindung eingegangen. Es zeigen:
- Fig. 1: Eine Teilansicht einer Federstahllamelle nach dem Stand der Technik;
- Fig. 2: Die Federstahllamelle nach Fig. 1 mit eingesetzten Klammern;
- Fig. 3: Eine Teilansicht einer Federstahllamelle gemäß der vorliegenden Erfindung;
- Fig. 4: Die Federstahllamelle nach Fig. 3 mit den möglichen Einbaulagen der Klammern.

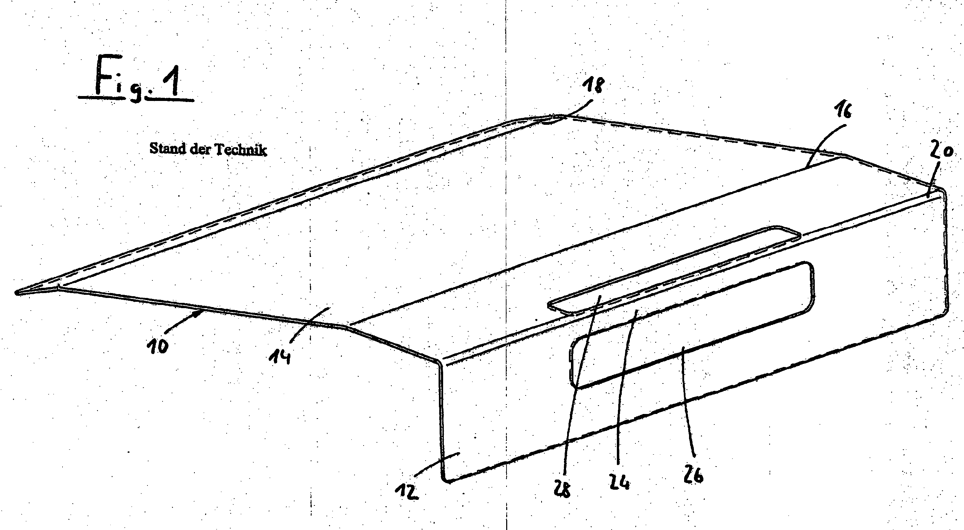

In Fig. 1 ist ein Randbereich einer Federstahllamelle 10 gezeigt, die im Verbund mit einem Faltenbalg (nicht gezeigt) und weiteren Federstahllamellen eine längenvariable Schutzabdeckung für Werkzeugmaschinen bildet. Die Federstahllamelle 10 besitzt einen ersten Bereich 12, der parallel zu einer Falte eines Faltenbalges (nicht gezeigt) verläuft und zur Befestigung an dieser dient, worauf später noch näher eingegangen wird. Ferner besitzt die Federstahllamelle 10 einen abgewinkelten Bereich 14, der sich im wesentlichen parallel zur Bewegungsrichtung der Schutzabdeckung bei der Längenänderung erstreckt, wobei allerdings eine erste Knicklinie 16 und eine zweite Knicklinie 18 andeuten, dass der zweite Bereich 14 in Bezug auf die Bewegungsrichtung keine einheitliche Winkelerstreckung besitzt. Weitere Knicklinien oder eine kontinuierliche Krümmung mit einem bestimmten oder einem variablen Radius sind zur Ausbildung des zweiten Bereichs 14 ebenfalls denkbar. Der zweite Bereich 14 besitzt eine Länge, die derart groß ist, dass der zweite Bereich den zweiten Bereich einer benachbarten Federstahllamelle auch im vollständig ausgefahrenen Zustand der längenvariablen Schutzabdeckung noch überlappt. Der mehrfach abgewinkelte zweite Bereich 14 liegt dabei unabhängig von der Ausfahrlänge elastisch federnd auf der benachbarten Lamelle an, so dass eine gute Abdichtung erreicht wird.

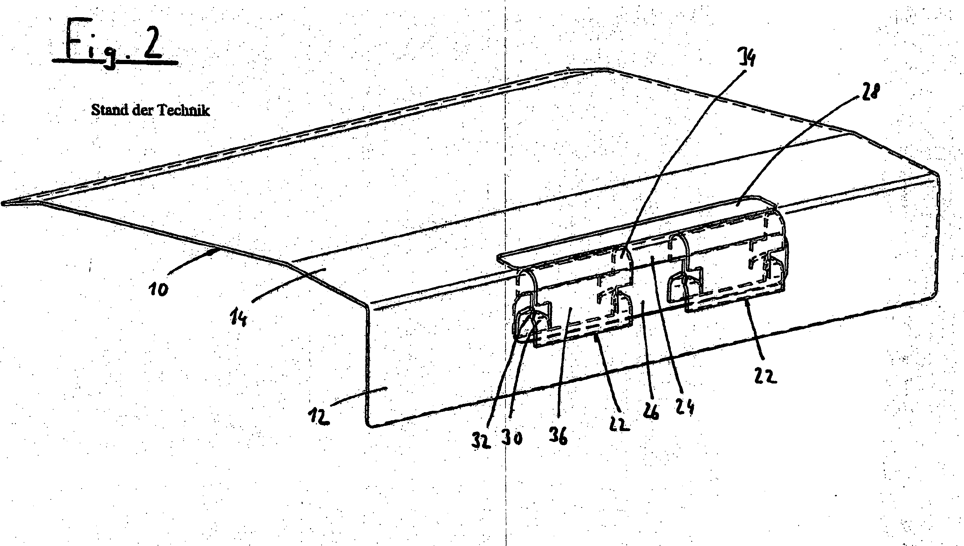

Gezeigt ist in Fig. 1 nur ein Randbereich, die tatsächliche Länge der Federstahllamelle 10 beträgt ein Vielfaches des gezeigten Ausschnittes. Im Bereich der Hauptknickstelle 20 zwischen dem ersten Bereich 12 und dem zweiten Bereich 14 sind Befestigungsmittel für eine Klammer 22 (s. Fig. 2) vorgesehen, die einen Steg 24 aufweisen, der im ersten Bereich 12 liegt und sich bis zur Knickstelle 20 erstreckt, sowie einen ersten, sich an den Steg 24 anschließenden unteren Schlitz 26 im ersten Bereich 12 und einen zweiten Schlitz 28 im zweiten Bereich 14. Die Länge des Steges 24 und der Schlitze 26, 28 beträgt bei dem in Fig. 1 gezeigten Ausführungsbeispiel mehr als das doppelte der Länge der Klammern 22.

Fig. 2 veranschaulicht die Lage der Klammern 22, wobei in der Abbildung zwei mögliche Einbaupositionen dargestellt sind. In der Praxis wird nur jeweils eine Klammer 22 an dem Steg 24 verankert, da die Federstahllamelle 10 im Bereich des anderen, nicht dargestellten Endes einen identischen oder ähnlichen Steg aufweist, der wiederum von zwei Schlitzen begrenzt ist. Erfolgt die Montage der Klammer 22 am linken Ende des Steges 26, wird entsprechend an dem nicht gezeigten Steg die Klammer am rechten Ende befestigt, so dass die Lamelle 10 durch Anlage jeweils einer Klammer an einer rechten bzw. linken Stegflanke gegen ein axiales Verrutschen in Bezug auf den Faltenbalg gehindert ist.

Bei längeren Lamellen 10 können auch weitere Stege mit benachbarten Schlitzen vorgesehen sein, um zusätzliche Klammern zur Verbindung zwischen der Federstahllamelle 10 und dem Faltenbalg einsetzen zu können.

Zur Befestigung an dem Faltenbalg wird zunächst die Lamelle 10 mit ihrem ersten Bereich 12 in eine parallel auf eine Falte des Faltenbalges aufliegende Lage gebracht. Anschließend wird die Klammer 22, die aus Federstahl besteht, durch den zweiten Schlitz 28 eingesetzt, wobei die Materialstärke der Falte größer ist als der Abstand zweier sich gegenüberliegender Widerhaken 30, so dass diese sich beim Aufsetzen elastisch aufbiegen und mit ihren Spitzen 32 in das Faltenbalgmaterial verkrallen. Die Klammern 22 selbst sind als Federstahlbügel mit einem Krümmungsbereich 34 und zwei sich daran anschließenden Schenkeln 36 ausgebildet, in denen die Widerhaken mit ihren Spitzen einander zugewandt ausgestellt sind. Die Klammern sind aus Federblech gestanzt oder gelasert.

Ungünstig bei dieser Variante nach dem Stand der Technik ist, dass der Steg 24 bei höherer dynamischer Beanspruchung nicht ausreichende Festigkeitswerte aufweisen kann, die zu einer Verformung oder sogar zu einer Beschädigung führen, so dass sich der Faltenbalg an dieser Stelle von der Federstahllamelle 10 lösen kann.

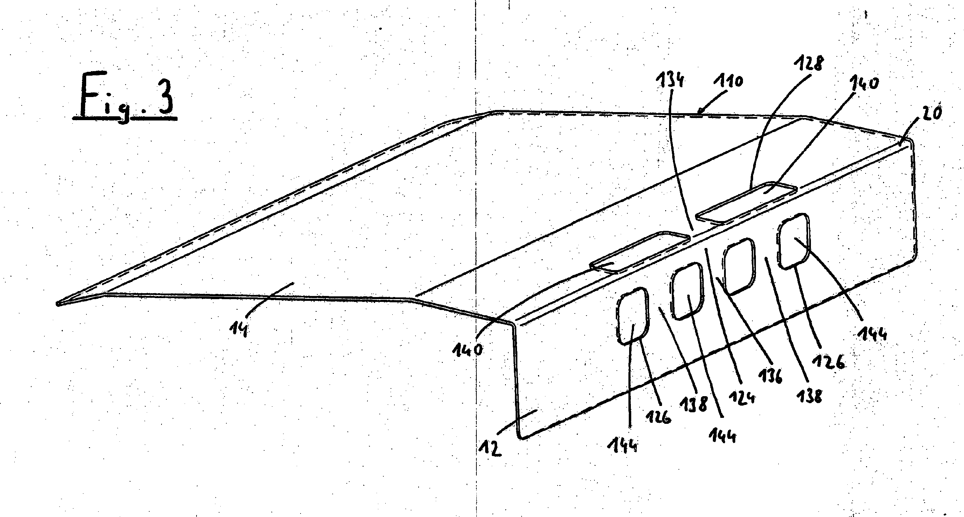

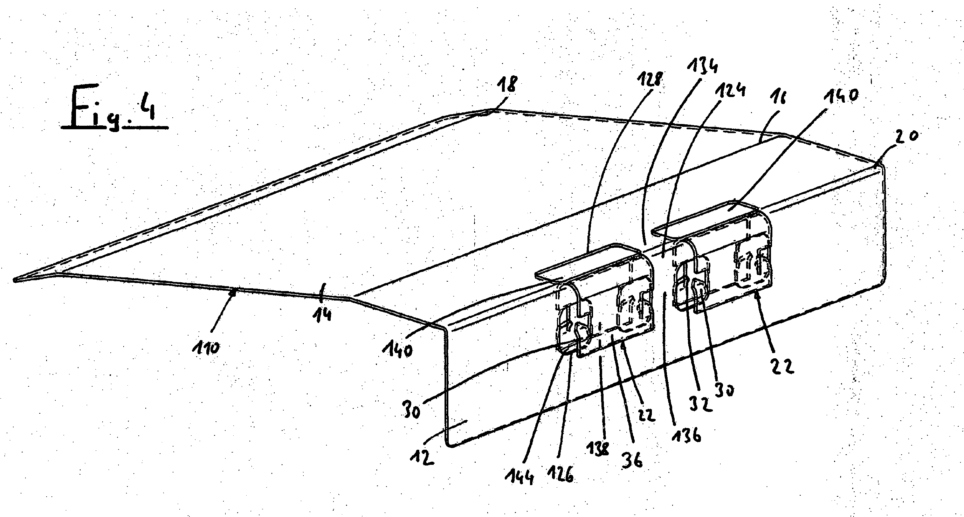

Abhilfe schafft die erfindungsgemäße, in Fig. 3 und 4 dargestellte Federstahllamelle 110, die in ihrem grundsätzlichen Aufbau der in Fig. 1 und 2 gezeigten Federstahllamelle 10 entspricht und auch im Rahmen bestehender längenvariabler Schutzabdeckungen problemlos gegen eine solche ausgetauscht werden kann. Gleiche Bereiche der Federstahllamelle 110 sind entsprechend Fig. 1 und 2 und mit gleichen Bezugszeichen versehen.

Der wesentliche Unterschied zum Stand der Technik besteht darin, dass die Schlitze 126, 128 durch Querstege 134, 136 und 138 in Kammern 140, 142, 144 unterteilt sind. Mittels der Querstege wird damit eine erheblich gesteigerte Festigkeit der Struktur erreicht, so dass der Steg 124 auch bei hoher Beschleunigung der Federstahllamelle 110 dauerhaft den Belastungen widerstehen kann und weder wesentliche Formänderungen noch Beschädigungen auftreten. Die verbleibenden Kammern 144 des ersten Schlitzes 126 dienen dabei als Durchtrittsöffnungen für die Widerhaken 30 mit ihren Spitzen 32, so dass das Verkrallen mit der Oberfläche des Faltenbalges nicht behindert wird. In Fig. 4 sind dabei wiederum beide grundsätzlichen Befestigungsmöglichkeiten für Klammern 22 dargestellt, wobei wiederum nur eine dieser Klammern in der Praxis eingesetzt wird und benachbarte Lamellen versetzte Klammern aufweisen, um die Länge der Schutzabdeckung im eingefahrenen Zustand möglichst klein zu halten. Vorteilhaft bei der gezeigten Ausführungsform ist weiterhin, dass die Kammern 140, die durch den Quersteg 134 aus dem vormalig zweiten Schlitz 128 gebildet sind, ungefähr die Länge einer Klammer 22 besitzen, so dass diese in beiden Längsrichtungen fixiert ist. Sollte es beispielsweise bei einer Federstahllamelle mit nur zwei über die Länge verteilten Befestigungsklammern zum Ausfall einer Klammer kommen, sichert die Klammer dennoch den Halt des Faltenbalges an der Federstahllamelle 110 in Längsrichtung.

## Patentansprüche

1. Längenvariable Schutzabdeckung für Werkzeugmaschinen, mit einem Faltenbalg, an dessen Falten Federstahllamellen (10) angebracht sind, die sich gegenseitig überlappen, wobei die Verbindung zwischen den Falten und den Federstahllamellen mittels Klammern (22) erfolgt, die jeweils einen Steg (124) zwischen schlitzen (126, 128) in der Federstahllamelle (110) umgreifen und an ihren Schenkeln (36) Widerhaken (30) aufweisen, die mit dem Faltenbalgmaterial verkrallen, wobei jede Lamelle wenigstens zwei Stege (124) mit benachbarten Schlitzen (126, 128) aufweist, die für jeweils eine Klammer (22) vorgesehen sind, und der Steg (124) eine größere Gesamtlänge als die Klammer (22) besitzt und die Klammern benachbarter Federstahllamellen (110) wechselseitig versetzt zueinander angeordnet sind, **dadurch gekennzeichnet, dass** wenigstens ein Schlitz (126, 128) pro Steg (124) durch einen Quersteg (134, 136, 138) in Schlitzklammern (140, 142, 144) unterteilt ist, die für die Aufnahme einer Klammer (22) geeignet sind.

2. Schutzabdeckung nach Anspruch 1, **dadurch gekennzeichnet, dass** beide Schlitze (126, 128) beidseitig des Steges (124) durch Querstege (134, 136, 138) unterteilt sind.

3. Schutzabdeckung nach Anspruch 1 oder 2, **dadurch gekennzeichnet, dass** der Schlitz (126) im Bereich der Widerhaken (30) durch einen Quersteg (136) in zwei Kammern unterteilt ist und die Kammern ihrerseits durch wenigstens jeweils einen weiteren Quersteg (138) zwischen den Widerhaken (30) unterteilt sind.

4. Schutzabdeckung nach einem der vorhergehenden Ansprüche, **dadurch gekennzeichnet, dass** wenigstens zwei Klammern (22) pro Federstahllamalle (110) vorgesehen sind.

5. Schutzabdeckung nach einem der vorhergehenden Ansprüche, **dadurch gekennzeichnet, dass** die Federstahllamellen (10) L-förmig mit einem parallel zu den Balten liegenden Bereich (12) und mit einem abgewinkelten Bereich (14) ausgebildet sind, wobei sich die abgewinkelten Bereich (14) benachbarter Lamellen (110) schuppenartig überlappen.

6. Schutzabdeckung nach Anspruch 5, **dadurch gekennzeichnet, dass** der Schlitz (126) für die Widerhaken (30) unterhalb des Steges (124) in dem parallel zu der Falte liegenden Bereich der Federstahllamelle (10) liegt.

7. Federstahllamelle zur Anbringung an einem Faltenbalg für eine Schutzabdeckung, die für die Befestigung von jeweils einer Klammer (22) wenigstens zwei Steege (124) zwischen Schlitzen (126, 128) aufweisen, dadurch gekennzeichhnet, dass wenigstens ein Schlitz (126, 128) pro Steg (124) durch wenigstens einen Quersteg (134, 136, 138) in Schlitzkammern (140, 144) unterteilt ist, in welchen eine Befestigungsklammer (22) einsetzbar ist.

8. Federstahllamelle nach Anspruch 7, **dadurch gekennzeichnet, dass** beide schlitze (126, 128) beidseitig das Steges (124) durch Querstege (134, 136, 138) unterteilt sind.

9. Federstahllamelle nach Anspruch 7 oder 8, **dadurch gekennzeichnet, dass** die Schlitze (126), durch welche Widerhaken (30) von Klammern (22) durchführbar sind, durch einen Quersteg (136) in zwei Kammern unterteilt sind und die Kammern durch wenigstens jeweils einen weiteren Quersteg (138) nochmalig in Kammern (144) unterteilt sind.

10. Federstahllamelle nach einem der Ansprüche 7 bis 9, **dadurch gekennzeichnet, dass** sie L-förmig mit einem ersten Bereich (12), an welchen Falten eines Faltenbalges anlegbar sind, und mit einem abgewinkelten Bereich (14) ausgebildet ist, wobei der abgewinkelte Bereich (14) zur Auflage auf eine Gleitfläche einer benachbarten Federstahllamelle bestimmt list.

11. Federstahllamelle nach Anspruch 10, **dadurch gekennzeichnet, dass** ein Schlitz (128) in dem ersten Bereich (12) und der zweite Schlitz in dem abgewinkelten Bereich (14) angeordnet ist.

12. Federstahllamelle nach Anspruch 11, **dadurch gekennzeichnet, dass** der Steg bis an die Knickstelle (20) zwischen den beiden Bereichen (12, 14) der Federstahllamelle (10) heranreicht.

13. Federstahllamelle nach Anspruch 10 oder 11, **dadurch gekennzeichnet, dass** der abgewinkelte Bereich (14) durch Knicklinien (16, 18) in Bereiche unterschiedlicher Winkellagen unterteilt ist.

## Claims

1. Variable-length protective cover for machine tools, comprising a bellows, to the folds of which spring steel plates (10) are attached which overlap each other, the folds and the spring steel plates being connected by means of clamps (22) which each encompass a web (124) between slots (126, 128) in the spring steel plate (110) and comprise barbs (30) on the legs (36) thereof which dig into the material of the bellows, each plate comprising at least two webs (124) having adjacent slots (126, 128) which are each provided for a clamp (22), and the web (124) having a greater overall length than the clamp (22) and the clamps of adjacent spring steel plates (110) being mutually offset, **characterised in that** at least one slot (126, 128) per web (124) is divided up into slot chambers (140, 142, 144) by a transverse web (134, 136, 138), which chambers are suitable for receiving a clamp (22).

2. Protective cover according to claim 1, **characterised in that** the two slots (126, 128) are divided up by transverse webs (134, 136, 138) on either side of the web (124).

3. Protective cover according to either claim 1 or claim 2, **characterised in that** the slot (126) is divided up into two chambers by a transverse web (136) in the region of the barbs (30) and the chambers are each divided up by at least one additional transverse web (138) between the barbs (30).

4. Protective cover according to any of the preceding claims, **characterised in that** at least two clamps (22) are provided per spring steel plate (110).

5. Protective cover according to any of the preceding claims, **characterised in that** the spring steel plates (10) are designed to be L-shaped, comprising a region (12) lying parallel to the folds and an angled region (14), the angled regions (14) of adjacent plates (110) overlapping each other in a scale-like manner.

6. Protective cover according to claim 5, **characterised in that** the slot (126) for the barbs (30) is located underneath the web (124) in the region of the spring steel plate (10) which is parallel to the fold.

7. Spring steel plate for attachment to a bellows for a protective cover, which plate comprises at least two webs (124) between slots (126, 128) for fastening a clamp (22) to each, **characterised in that** at least one slot (126, 128) per web (124) is divided up into slot chambers (140, 144) by at least one transverse web (134, 136, 138), into which chambers a fastening clamp (22) can be inserted.

8. Spring steel plate according to claim 7, **characterised in that** the two slots (126, 128) are divided up by transverse webs (134, 136, 138) on either side of the web (124).

9. Spring steel plate according to either claim 7 or claim 8, **characterised in that** the slots (126), through which barbs (30) of clamps (22) can be guided, are divided up into two chambers by a transverse web (136) and the chambers are each divided up into chambers (144) again by at least one additional transverse web (138).

10. Spring steel plate according to any of claims 7 to 9, **characterised in that** said plate is designed to be L-shaped, comprising a first region (12) on which folds of a bellows can be placed, and an angled region (14), the angled region (14) being designed to be placed on a sliding surface of an adjacent spring steel plate.

11. Spring steel plate according to claim 10, **characterised in that** one slot (128) is arranged in the first region (12) and the second slot is arranged in the angled region (14).

12. Spring steel plate according to claim 11, **characterised in that** the web reaches up to the bend (20) between the two regions (12, 14) of the spring steel plate (10).

13. Spring steel plate according to either claim 10 or claim 11, **characterised in that** the angled region (14) is divided up by bend lines (16, 18) into regions of different angular positions.

## Revendications

1. Revêtement de protection variable en longueur pour machine-outil comportant un soufflet sur les plis duquel sont montées des lamelles en acier à ressorts (10) qui se chevauchent mutuellement, la liaison entre les plis et les lamelles en acier à ressorts étant effectuée au moyen de pinces (22) qui enveloppent respectivement une traverse (124) réalisée entre des rainures (126, 128) réalisées dans les lamelles en acier à ressorts (110), et qui comportent sur leurs branches (36) des barbillons (30) qui s'imbriquent dans le matériau constitutif du soufflet, chacune des lamelles comportant au moins deux traverses (124) avec des rainures voisines (126, 128) qui sont respectivement prévues pour une pince (22), la traverse (124) ayant une longueur totale supérieure à celle de la pince (22), et les pinces de lamelles en acier à ressorts voisines (110) étant alternativement décalées les unes par rapport aux autres,
**caractérisé en ce qu'**
au moins une rainure (126, 128) par traverse (124) est subdivisée par une traverse transversale (134, 136, 138) en chambres de rainures (140, 142, 144) qui sont adaptées pour la réception d'une pince (22).

2. Revêtement de protection conforme à la revendication 1,
**caractérisé en ce que**
les deux rainures (126, 128) sont subdivisées de part et d'autre de la traverse (124) par des traverses transversales (134, 136, 138).

3. Revêtement de protection conforme à la revendication 1 ou 2,
**caractérisé en ce que**
la rainure (126) est subdivisée en deux chambres dans la zone des barbillons (30) par une traverse transversale (136), et ces chambres sont de leur côté subdivisées par au moins une autre traverse transversale respective (138) entre les barbillons (30).

4. Revêtement de protection conforme à l'une des revendications précédentes,
**caractérisé en ce qu'**
il est prévu au moins deux pinces (22) par lamelle en acier à ressorts (110).

5. Revêtement de protection conforme à l'une des revendications précédentes,
**caractérisé en ce que**
les lamelles en acier à ressorts (10) sont réalisées en forme de L avec une zone (12) située parallèlement aux plis et une zone (14) coudée, les zones coudées (14) de lamelles (110) voisines se chevauchant à la manière d'écailles.

6. Revêtement de protection conforme à la revendication 5,
**caractérisé en ce que**
la rainure (126) pour les barbillons (30) est positionnée en-dessous de la traverse (124) dans la zone des lamelles en acier à ressorts (10) située parallèlement aux plis.

7. Lamelle en acier à ressorts destinée à être montée sur un soufflet pour un revêtement de protection qui comporte, pour permettre la fixation d'une pince respective (22) au moins deux traverses (124) situées entre des rainures (126, 128),
**caractérisé en ce qu'**
au moins une rainure (126, 128) par traverse (124) est subdivisée par au moins une traverse transversale (134, 136, 138) en des chambres de rainures (140, 144) dans lesquelles peut être logée une pince de fixation (22).

8. Lamelle en acier à ressorts conforme à la revendication 7,
**caractérisée en ce que**
les deux rainures (126, 128) sont subdivisées de part et d'autre de la traverse (124) par des traverses transversales (134, 136, 138).

9. Lamelle en acier à ressorts conforme à la revendication 7 ou 8,
**caractérisée en ce que**
les rainures (126) au travers desquelles peuvent être insérés des barbillons (30) de pinces (22) sont subdivisés en deux chambres par une traverse transversale (136), et ces chambres sont encore une fois subdivisées en chambres (144), par au moins une autre traverse transversale respective (138).

10. Lamelle en acier à ressorts conforme à l'une des revendications 7 à 9,
**caractérisée en ce qu'**
elle est réalisée en forme de L avec une première zone (12) sur laquelle peuvent être montées des plis d'un soufflet, ainsi qu'une zone coudée (14), la zone coudée (14) étant adaptée pour être appliquée sur une surface de glissement d'une lamelle en acier à ressorts voisine.

11. Lamelle en acier à ressorts conforme à la revendication 10,
**caractérisée en ce qu'**
une rainure (128) est située dans la première zone (12) tandis que la seconde rainure est située dans la zone coudée (14).

12. Lamelle en acier à ressorts conforme à la revendication 11,
**caractérisée en ce que**
la rainure s'étend jusqu'au point de pliage (20) situé entre les deux zones (12, 14) de la lamelle en acier à ressorts (10).

13. Lamelle en acier à ressorts conforme à la revendication 10 ou 11,
**caractérisée en ce que**
la zone coudée (14) est subdivisée par des lignes de pliage (16, 18) en zones ayant des positions angulaires relatives différentes.
